# EUROPEAN PATENT SPECIFICATION

(11) **EP 2 824 990 B1**
(45) Date of publication and mention of the grant of the patent: **07.09.2016**
(21) Application number: 13290160.4
(22) Date of filing: 12.07.2013
(51) Int. Cl.: H04W 76/02, H04L 29/12, H04W 92/20

(54) **Method for establishing X2 connections between base stations and associated equipments**
Verfahren zum Aufbau von X2-Verbindungen zwischen Basisstationen und zugehörige Geräte
Procédé permettant d'établir des connexions X2 entre stations de base et équipements associés

(43) Date of publication of application: 14.01.2015
(73) Proprietor: ALCATEL LUCENT, 92100 Boulogne-Billancourt (FR)
(72) Inventor: Godin, Philippe, 91620 Nozay (FR)
(74) Representative: Sogan, Gloria

(56) References cited:
- US-A1- 2012 264 418
- CHINA UNICOM: "eNB IP address discovery of X2-GW", 3GPP DRAFT; R3-130124 ENB IP DISCOVERY OF X2-GW, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG3, no. Malta; 20130128 - 20130201 18 January 2013 (2013-01-18), XP050670927, Retrieved from the Internet: URL:http://www.3gpp.org/ftp/tsg_ran/WG3_Iu /TSGR3_79/Docs/ [retrieved on 2013-01-18]
- ALCATEL-LUCENT: "Down-selection for IP Address Discovery and X2 Setup Routing", 3GPP DRAFT; R3-130948_X2GWSETUPSELECT, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG3, no. Fukuoka, Japan; 20130520 - 20130524 11 May 2013 (2013-05-11), XP050701033, Retrieved from the Internet: URL:http://www.3gpp.org/ftp/tsg_ran/WG3_Iu /TSGR3_80/Docs/ [retrieved on 2013-05-11]
- "3rd Generation Partnership Project; Technical Specification Group Radio Access Network; Universal Mobile Telecommunications System (UMTS) and LTE; Mobility enhancements for Home Node B (HNB) and Home enhanced Node B (HeNB) (Release 11)", 3GPP STANDARD; 3GPP TR 37.803, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG3, no. V11.2.0, 27 June 2013 (2013-06-27), pages 1-116, XP050711892, [retrieved on 2013-06-27]

## Description

### BACKGROUND OF THE INVENTION

The present invention relates to the field of communication networks and more particularly to the establishment of X2 connections between the base stations of a radio access network.

In radio access networks, connections over X2 interface are established between the base stations located in the same area in order to enable smooth handovers when the user equipment connection is transferred from one base station to another. Such X2 connections require, for the base station initiating the connection, the knowledge of the IP address of the other base station to establish a direct X2 connection. One known way to retrieve the IP address of a discovered neighbouring base station is the enhanced Transport Network Layer (TNL) address discovery procedure. In such procedure, the IP address of the targeted base station is requested toward a Mobility Management Entity (MME) of the core network by sending a eNodeB/MME Configuration Transfer message through the S1 interface. However, with heterogeneous networks comprising both macro base stations (managed by a network operator) and femto base stations (which may be switched on and off by the users), risk is high that MME traffic increases considerably at peak hours (basically in the morning or after work in the evening) when many users switch on their femto base station at the same time. Indeed, one MME may manage up to one hundred thousand of femto base stations so that the amount of eNodeB/MME Configuration Transfer messages received simultaneously may be huge and may therefore produce overload.

Besides, In order to reduce scalability problems in dense heterogeneous networks, X2 gateways are being specified to establish X2 connections between the base stations through the X2 gateway. However, such solution induces additional latencies in comparison with a direct X2 connection and may not be preferred by some base stations. As a consequence, the set up of direct X2 connections may still be preferred or needed by some base stations despite the connection possibility via the X2 gateway.

The patent document US 2012/0264418 A1, 18.10.2012, discloses a method for establishing an X2 interface between femtocell base stations.

### SUMMARY OF THE INVENTION

It is therefore an object of the present invention to overcome the above mentioned drawbacks of the state of the art and to provide a solution that aims at enabling to avoid latencies in the X2 connections and scalability issues in their establishment.

Thus, the present invention refers to a method for establishing a X2 connection between two base stations in a network comprising X2 gateways wherein the said method comprises a registration step of the two base stations toward a local X2 gateway and wherein at least one IP address of one of the two base stations is transmitted to the other base station within an X2 AP set up message.

According to another aspect of the present invention, the established X2 connection is a direct X2 connection.

According to a further aspect of the present invention, the base stations register toward a local gateway when switched on and the registration comprises the sending of the base station ID and the base station IP address to the local X2 gateway.

According to another aspect of the present invention, the registration of a base station also comprises the sending of an X2 connection type preference, corresponding either to a direct X2 connection or to an X2 connection via the X2 gateway.

According to a further aspect of the present invention, after the registration step, the method comprises a step of detection of one base station by the other base station and the retrieving of the ID of the detected base station by the detecting base station.

According to an additional aspect of the present invention, it comprises the sending of an X2 AP set up request from a requesting base station, to the X2 gateway to establish an X2 connection with a targeted base station, the said X2 AP set up request comprising:
- a requesting base station ID and,
- a targeted base station ID.

According to another aspect of the present invention, the X2 AP set up request also comprises an additional field corresponding to the IP address of the requesting base station sending the said X2 AP set up request.

According to an additional aspect of the present invention, the X2 AP set up request also comprises an additional field corresponding to the X2 connection type preference of the requesting base station.

According to another aspect of the present invention, in the case of a registration of the targeted base station comprising a direct connection preference, upon reception of the X2 AP set up request from the requesting base station, the X2 gateway sends back the at least one IP address of the targeted base station to the requesting base station.

According to a further aspect of the present invention, the at least one IP address of the targeted base station is retrieved by the X2 gateway from the registration information and is transmitted to the requesting base station within an X2 AP set up failure message.

According to an additional aspect of the present invention, the method also comprises a step of forwarding the X2 AP set up request by the X2 gateway to the targeted base station based on the registration information of the targeted base station and a step of reception, by the targeted base station, of the X2 AP set up request.

According to another aspect of the present invention, the method also comprises a step of selection, by the targeted base station, of an X2 connection type based on its X2 connection preference and the X2 connection type preference of the requesting base station transmitted within an X2 AP set up request message.

According to a further aspect of the present invention, if direct X2 connection is selected and an IP address is included in the X2 AP set up request, the method also comprises the following steps :
- the sending, by the targeted base station in response to the X2 AP set up request, of an X2 AP set up failure toward the local X2 gateway, the said X2 AP set up failure indicating the selection of a direct X2 connection,
- the sending, by the targeted base station directly to the requesting base station, of a direct X2 AP set up request based on an IP address of the requesting base station received within the X2 AP set up request sent by the said requesting base station,
- the establishment of a direct X2 connection by the requesting base station based on the received direct X2 AP set up request, the said establishment being achieved by replying a direct X2 AP set up response to the targeted base station.

According to an additional aspect of the present invention, if direct X2 connection is selected, the method also comprises the following steps :
- the sending, by the targeted base station, of an X2 AP set up failure toward the local X2 gateway, the said X2 AP set up failure comprising the targeted base station IP address and the agreement of a direct X2 connection,
- the forwarding by the local X2 gateway of the X2 AP set up failure to the requesting base station,
- the reception by the requesting base station of the X2 AP set up failure,
- the sending, by the requesting base station directly to the targeted base station, of a direct X2 AP set up request based on the targeted base station IP address received within the X2 AP set up failure,
- the establishment of a direct X2 connection by the targeted base station based on the received direct X2 AP set up request, the said establishment being achieved by replying a direct X2 AP set up response to the requesting base station.

According to a further aspect of the present invention,if X2 connection through the X2 gateway is selected, the method also comprises the following steps :
- the sending, by the targeted base station, of an X2 set up response toward the local X2 gateway, the said X2 set up response comprising the selection of a X2 connection through the X2 gateway,
- the forwarding by the local X2 gateway of the X2 AP set up response to the requesting base station,
- the reception by the requesting base station of the X2 AP set up response,
- the establishment of an X2 connection through the X2 gateway by the requesting base station based on the received X2 AP set up response.

According to an additional aspect of the present invention, the method also comprises the following steps :
- the sending, by the targeted base station, of an X2 AP set up response toward the local X2 gateway, the said X2 AP set up response comprising the preference of a direct X2 connection, the targeted base station ID and an IP address of the targeted base station,
- the forwarding by the local X2 gateway of the X2 AP set up response to the requesting base station,
- the reception by the requesting base station of the X2 AP set up response,
- the establishment of an X2 connection through the X2 gateway by the requesting base station based on the received X2 AP set up response.
- the tearing down, by the requesting base station, of the X2 connection established through the X2 gateway,
- the sending, to the targeted base station, of a direct X2AP set up request based on the targeted base station IP address received within the X2AP set up response message,
- the establishment of a direct X2 connection by the targeted base station based on the received direct X2 AP set up request, the said establishment being achieved by replying a direct X2 AP set up response to the requesting base station.

According to another aspect of the present invention, the two base stations are femto base stations or macro base stations or one macro base station and one femto base station.

The embodiments of the present invention also refer to a base station configured for establishing an X2 connection with another base station using an X2 gateway by sending X2 AP set up message to the other base station via the X2 gateway wherein the base station is configured for adding at least one additional field within the X2 AP set up message, the said at least one additional field comprising its IP address which is transmitted to the other base station via the X2 gateway in order to establish a direct X2 connection between both base stations.

The embodiments of the present invention also refer to an X2 gateway configured for:
- receiving registration messages comprising an ID, at least one IP address and an X2 connection type preference from the local base stations,
- establishing a mapping table based on the received registration messages,
- emitting an X2 AP set up message comprising an IP address stored in the mapping table upon request from a base station to establish an X2 connection with another base station having an X2 connection type preference corresponding to a direct X2 connection.

### BRIEF DESCRIPTION OF THE DRAWINGS

FIG.**1** is a diagram of a network portion comprising a E-UTRAN portion and a core network portion;
FIG.**2** is a logical network architecture according to a first embodiment of the present invention;
FIG.**3** is a logical network architecture according to a second embodiment of the present invention;
FIG.**4** is a logical network architecture according to a third embodiment of the present invention;
FIG.**5** is a logical network architecture according to a fourth embodiment of the present invention;

### DETAILED DESCRIPTION OF THE INVENTION

As used hereafter, the term "UMTS" refers to the acronym Universal Mobile Telecommunications System;
As used hereafter, the term "GW" refers to the expression gateway;
As used hereafter, the term "MME" refers to the acronym Mobility Management Entity;
As used hereafter, the term "ID" refers to the expression Identity;
As used hereafter the terms "S1" and "X2" refer to interface protocols defined in the 3GPP standard;
As used hereafter, the term "E-UTRAN" refers to the acronym evolved-UMTS Terrestrial Radio Access Network;
As used hereafter, the term BSx refers to the expression Base Station and the index x refers to a particular base station.

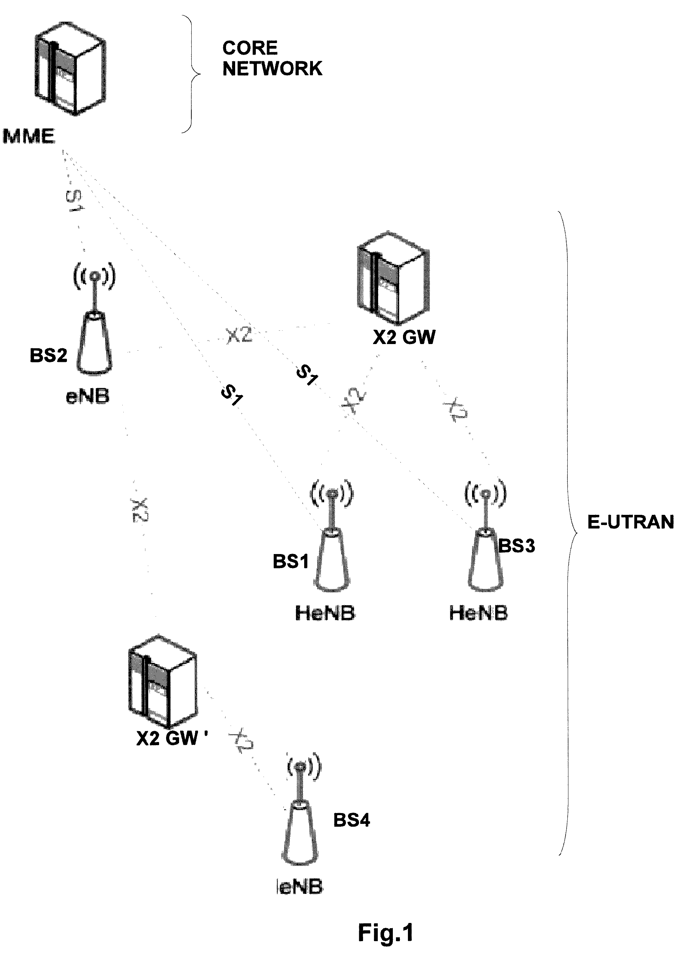

Fig.**1** represents a diagram of a portion of a network comprising X2 proxies or X2 gateways. The network portion comprises a Mobility Management Entity (MME) located in the core network, two local X2 gateways noted X2 GW and X2 GW' and four base stations BS1, BS2, BS3 and BS4 located in the evolved-UMTS Terrestrial Radio Access Network (E-UTRAN). The second and fourth base stations BS2 and BS4 are macro base stations or evolved Node B (eNB) whereas the first and the third base stations BS1 and BS3 are femto base stations or Home evolved Node Bs (HeNBs). The base stations BS1, BS2, BS3 and BS4 provide radio connections to the user equipments (not represented).

The number of base stations is given as an example without any limitations but it should be noticed that in practice, the number of macro base stations per X2 gateway and the number of X2 gateways per MME may be higher. The number of femto base stations is potentially much higher than the number of macro base stations. As an example without any limitations, an MME could be linked to tens of X2 Gateways and an X2 Gateway could be linked to tens of macro base stations and hundreds or thousands of femto base stations.

The embodiments of the present invention aim at establishing an X2 connection between two neighboring base stations, for example BS2 and BS3 (any other combination of base stations may also be used), without requiring a (TNL) address discovery procedure by the requesting base station, for example BS3, to retrieve the IP address of the targeted base station, for example BS2.

The main idea of the present invention is to use one of the X2 AP set up messages used for establishing an X2 connection through the local X2 Gateway herein noted X2 GW to transfer an IP address of a base station to the other base station in order to further establish subsequently a direct connection between both base stations.

The embodiments of the present invention refer to a method for establishing a direct X2 connection between two base stations. The common steps of these embodiments will first be described and the specificities of each embodiment will be described in the following of the description.

### • Features common to all embodiments:

### a) Registration step

a preliminary step refers to the registration of the base stations toward their local X2 GW.

In the case of a macro base station such as BS2 or BS4, the registration may be achieved towards several X2 GWs, generally not more than two or three. Furthermore, the macro base stations are generally managed by the operators and stay switched on permanently so that the registration occurs only at the launching or after a reconfiguration of the macro base station.

For the femto base stations such as BS1 or BS3 which are generally managed directly by the users, the registration is achieved only toward one X2 GW but the registration is required each time the femto base station is switched on, basically it could be daily.

In both cases (macro and femto base stations), the registration refers to the sending from the base station to the X2 GW of a message comprising the identity (ID) and at least one IP address of the base station. The IP address may be a dynamic or a static IP address. As an option, an additional field comprising an X2 connection preference (either a direct X2 connection preference or an X2 connection via X2 gateway preference or an X2 direct only or X2 gateway only...), for example a flag indicating that the base station supports or accepts only direct X2 connection, can be used as indicator or a bit value can be associated with the different options.

The message used for the registration is for example an X2 AP message but other types of messages of any protocol enabling the transmission of the ID and the IP address may be used. Besides, it has to be noted that the base stations are configured with the IP address of the at least one local X2 GW so that the base stations know the address of the X2 gateway and may therefore send a registration message just after being switched on.

Thanks to all these registration messages received from the different base stations, the X2 GW can establish a mapping table comprising the base station IDs and their corresponding IP addresses (and optionally their X2 connection preference).

### b) Detection step

In order for a first base station, for example BS3, to request the establishment of an X2 connection with a neighboring base station, for example BS2, the first base station BS3 needs to be aware of the presence of the neighboring base station BS2. In such case, BS3 is the detecting base station whereas BS2 is the detected base station.

Different ways for such detection may be considered:
According to a first embodiment, the detection is achieved by the reports sent by the attached user equipments to their serving base station, BS3 in the present case, indicating the presence of another base station, BS2 in the present case, in the neighborhood.

According to another embodiment, the detection may be achieved by the detecting base station BS3 itself by sniffing or scanning its surroundings to detect signals emitted by the other base stations and notably BS2.

According to a further embodiment, the presence of the other base station BS2 may be configured.

Such detection step may also be achieved by any other methods and enables a base station to detect a neighboring base station and to retrieve the ID of this detected base station.

### • Specificities of the different embodiments:

The steps of the method that are associated with the different embodiments will now be described.

### 1) First embodiment: Enhanced X2 gateway embodiment

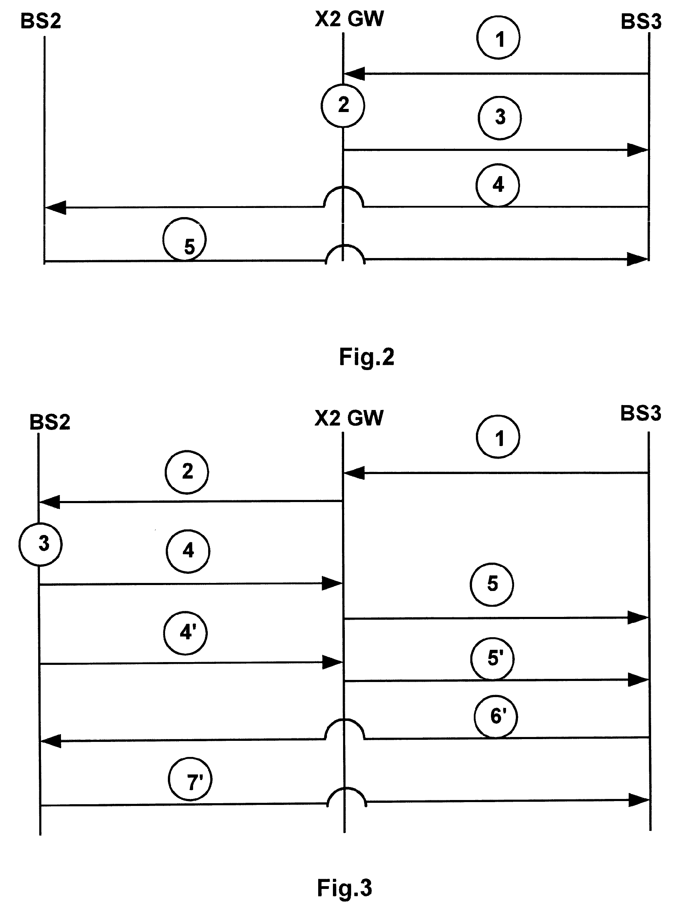

In a first embodiment represented in Figure 2, it is assumed that an X2 connection preference is provided to the X2 GW during registration so that the X2 GW has a mapping table comprising the ID, at least one IP address and an X2 connection preference at least for some of the registered base stations. In the present case, the base station BS2 has registered toward the X2 GW when switched on and has indicated in the registration message a preference for a direct X2 connection.

Thus, after detection, by BS3, of the presence in its vicinity of base station BS2, BS3 decides to establish an X2 connection with BS2 and sends an X2 AP set up request message (step 1) to the X2 GW. This X2 AP set up request message comprises an ID of BS3 (source ID) and an ID of BS2 (destination or target ID) and optionally some additional fields such as a BS3 IP address (source IP address) and/or an X2 connection preference, for example a direct X2 connection in the present case. BS3 is therefore the requesting base station whereas BS2 is the targeted base station.

When the X2 GW receives the X2 AP set up request, the X2 GW checks in its mapping table the X2 connection preference of the destination base station BS2 (step 2). As BS2 preference is a direct X2 connection (and in the case wherein such direct connection is supported by BS3, which is the case in the present case), the X2 GW retrieves BS2 IP address in its mapping table (step 2) and sends back an X2 set up message, comprising BS2 IP address, to BS3 (step 3). Such message is for example an X2 AP set up failure message so that no X2 connection through the X2 GW is established. Thus, BS3 receives this X2 AP set up failure message and retrieves BS2 IP address so that BS3 can then request a direct X2 connection with BS2 by sending a direct X2 AP set up request to the IP address of BS2 (step 4). The direct X2 connection may then be established by BS2 by replying a direct X2 AP set up response (step 5).
Alternatively, if the X2 connection preference is not provided during registration but if an additional field in the X2 AP set up request message emitted by BS3 indicate that BS3 prefers direct X2 connection, the X2 GW may then send back to BS3 an X2 AP set up failure message comprising the IP address of BS2. In the other cases, the X2 AP set up message emitted by BS3 will be forwarded to BS2 by the X2 GW.

In this embodiment, it is required that the X2 GW has enhanced capacities and is able to generate itself a message such as an X2 AP set up failure message to send back BS2 IP address to BS3, however, this generation can be limited to a pre-stored generic X2 setup failure message in which the X2 GW simply includes the BS2 IP address before sending.

Besides, it can be preferred that the X2 GW acts as a "full transparent" node and has only the capacities to forward a message toward a destination. Thus, in the following embodiments, the X2 GW does not generate any messages but only forward the received messages toward the destination specified in the messages.

### 2) Second embodiment

In a second embodiment represented in Figure 3, after detection, by BS3, of the presence in its vicinity of the base station BS2, BS3 decides to establish an X2 connection with BS2 and sends an X2 AP set up request message to the X2 GW (step 1). This X2 AP set up request message comprises an ID of BS3 (source ID), an ID of BS2 (destination or target ID) and optionally an X2 connection type preference. BS3 is therefore the requesting base station whereas BS2 is the targeted base station. This X2 AP set up request message is forwarded by the X2 GW to BS2 (step 2) based on the target ID.

At the reception of this X2 AP set up request message, BS2 achieves a selection to decide based on its X2 connection preference and possibly according to the X2 connection preference of BS3 if provided within the X2 AP set up request message which type of X2 connection has to be established (step 3).

If the type of connection selected by BS2 is an X2 connection through the X2 GW, an X2 AP set up response message is sent back to the X2 GW (step 4) and then forwarded to BS3 to establish the said X2 connection via X2 GW (step 5).

If the type of connection selected by BS2 is a direct X2 connection, then BS2 sends back an X2 AP set up failure message comprising its IP address in an additional field and optionally its X2 connection preference (which is a direct X2 connection) or a direct X2 connection agreement (if a direct X2 connection preference was sent within the X2 AP set up request) in a further additional field (step 4'). This X2 AP set up failure message is forwarded by the X2 GW to BS3 (step 5'). BS3 receives the IP address of BS2 within the X2 AP set up failure message and may then send a direct X2 AP set up request to BS2 using the received IP address of BS2 (step 6'). Then, BS2 can establish the direct X2 connection by replying a direct X2 AP set up response to BS3 (step 7').

### 3) Third embodiment

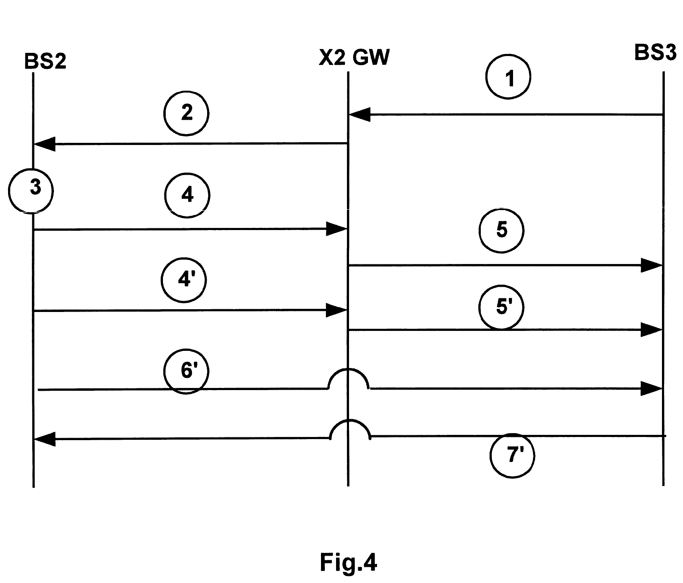

In a third embodiment represented in Figure 4, after detection, by BS3, of the presence in its vicinity of the base station BS2, BS3 decides to establish an X2 connection with BS2 and sends an X2 AP set up request message to the X2 GW (step 1). This X2 AP set up request message comprises an ID of BS3 (source ID), an ID of BS2 (destination or target ID), an IP address of BS3 (source IP address) and optionally an X2 connection type preference. BS3 is therefore the requesting base station whereas BS2 is the targeted base station. This X2 AP set up request message is forwarded by the X2 GW to BS2 (step 2) based on the target ID. At the reception of this X2 AP set up request message, BS2 achieves a selection to decide based on its X2 connection preference and possibly according to the X2 connection preference of BS3 if provided within the X2 AP set up request message which type of X2 connection has to be established (step 3).

If the type of connection selected by BS2 is an X2 connection through the X2 GW, an X2 AP set up response message is sent back to the X2 GW (step 4) and then forwarded to BS3 to establish the said X2 connection via X2 GW (step 5).

If the type of connection selected by BS2 is a direct X2 connection, then BS2 sends back an X2 AP set up failure message (step 4'). This X2 AP set up failure message is forwarded by the X2 GW to BS3 (step 5').

Furthermore, BS2 sends a direct X2 AP set up request to BS3 using the IP address received within the X2 AP set up request (step 6'). BS3 can then establish the direct X2 connection by replying a direct X2 AP set up response to BS2 (step 7').

### 4) Fourth embodiment

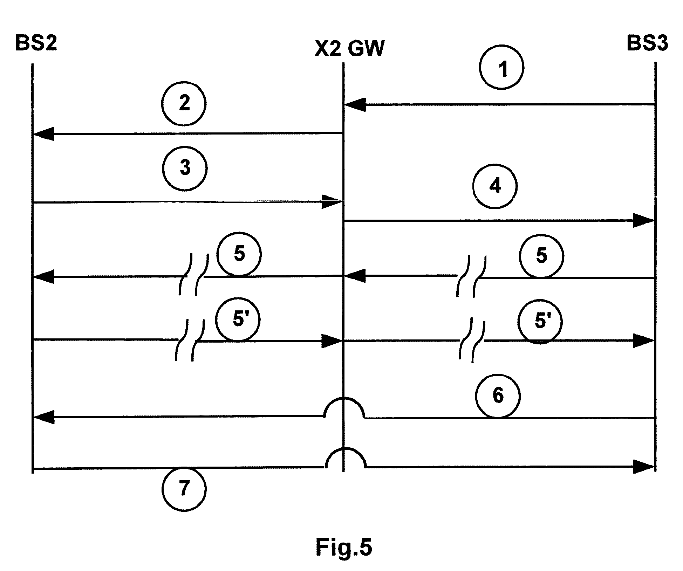

In a fourth embodiment represented in Figure 5, after detection, by BS3, of the presence in its vicinity of the base station BS2, BS3 decides to establish an X2 connection with BS2 and sends an X2 AP set up request message to the X2 GW (step 1). This X2 AP set up request message comprises an ID of BS3 (source ID), an ID of BS2 (destination or target ID) and optionally an X2 connection type preference. BS3 is therefore the requesting base station whereas BS2 is the targeted base station. This X2 AP set up request message is forwarded by the X2 GW to BS2 (step 2) based on the target ID.

If the type of connection preferred by BS2 or BS3 is a direct X2 connection then BS2 sends back an X2 AP set up response message comprising its IP address in an additional field and optionally its X2 connection preference (which is a direct X2 connection) or a direct X2 connection agreement (if a direct X2 connection preference was sent within the X2 AP set up request) in a further additional field (step 3). This X2 AP set up response message is forwarded by the X2 GW to BS3 (step 4) so that an X2 connection via the X2 GW is established. BS3 receives the IP address of BS2 within the X2 AP set up response message and may then tear down the X2 connection established via the X2 GW (step 5). This tearing down may have to be acknowledged by BS2 (step 5'). BS3 can then send a direct X2 AP set up request to BS2 using the received IP address (step 6). Then, BS2 can establish the direct X2 connection by replying a direct X2 AP set up response to BS3 (step 7).

In the different embodiments presented previously, the requesting base station BS3 and the targeted base station BS2 are femto base stations but the mechanisms of the establishment of an X2 connection described in these embodiments can be applied identically to macro base stations or a combination of a macro base station with a femto base station, the macro base station being either the requesting or the targeted base station.

Furthermore, it has to be noticed that a macro base station, unlike a femto base station which can be connected only to a single X2 gateway, can be registered and connected to several X2 GWs, however this number remains limited to two or three generally. In such case, when a macro base station such as BS2 in Figure 1 is connected to several X2 Gateways, X2 GW and X2 GW' in the present case, the macro base station (BS2) which detects another base station, for example BS1 in the present case, does not know to which X2 gateway the detected base station (BS1) is connected.

According to the embodiments of the present invention, the macro base station (BS2) sends either simultaneously or one after the other an X2 AP set up request to the different X2 gateways (X2 GW and X2 GW' in the present case) to which it is connected until the message received in response to the X2 AP set up request be an X2 AP set up response or an X2 AP set up failure comprising the IP address of the targeted base station BS1.

Besides, a base station may be configured with several IP addresses so that several IP addresses may be provided in the registration message or in the X2 AP set up messages to provide a redundancy.

Thus, the embodiments of the present invention by transmitting an IP address of a base station to another base station in an X2 AP set up message transmitted via or by an X2 gateway toward which both base stations have registered enable to establish a direct X2 connection between both base stations without requiring any enhanced TNL address discovery procedure and therefore without requiring the exchange of message with the MME. As a consequence, even with the implementation of a very high number of femto base stations in an area managed by a single MME, there will not be any overload at the MME due to the enhanced TNL address discovery procedure even at peak hours when many femto base stations are switched on. Furthermore, the embodiments described above are easy to implement as they only require the modification of X2 set up messages to introduce at least one additional field and for the first described embodiment the enhancement of the X2 gateways to provide them the capacity to generate such X2 AP set up messages. However, such generation could be limited to sending a pre-stored X2AP setup message in which the X2 gateway simply includes an IP address.

## Claims

1. Method for establishing a X2 connection between two base stations (BS2, BS3) in a network comprising X2 gateways (X2 GW) wherein said method comprises a registration step of the two base stations (BS2, BS3) toward a local X2 gateway (X2 GW), a step of sending by a base station (BS3) an X2 AP set up request message to the local X2 gateway (X2 GW) comprising an ID of the base station (BS3) and an ID of the other base station (BS2) to which the X2 connection is to be established and wherein at least one IP address of one of the two base stations (BS2, BS3) is transmitted by the local X2 gateway (X2 GW) to the other base station (BS2) within an X2 AP set up message and an X2 connection is established between the two base stations (BS2, BS3) using the transmitted IP address.

2. Method in accordance with claim 1 wherein the established X2 connection is a direct X2 connection.

3. Method in accordance with claim 1 or 2 wherein the base stations (BS2, BS3) register toward a local gateway (X2 GW) when switched on and wherein the registration of a base station (BS2, BS3) comprises the sending of its ID and its IP address to the local X2 gateway (X2 GW).

4. Method in accordance with claim 3 wherein the registration of a base station (BS2, BS3) also comprises the sending of an X2 connection type preference, corresponding either to a direct X2 connection or to an X2 connection via the X2 gateway (X2 GW).

5. Method in accordance with one of the previous claims wherein, after the registration step, it comprises a step of detection of one base station (BS2) by the other base station (BS3) and the retrieving of the ID of the detected base station (BS2) by the detecting base station (BS3).

6. Method in accordance with one of the previous claims wherein it comprises the sending of an X2 AP set up request from a requesting base station (BS3), to the X2 gateway (X2 GW) to establish an X2 connection with a targeted base station (BS2), the said X2 AP set up request comprising:
- a requesting base station (BS3) ID and,
- a targeted base station (BS2) ID.

7. Method in accordance with claim 6 wherein the X2 AP set up request also comprises an additional field corresponding to the IP address of the requesting base station (BS3) sending the said X2 AP set up request.

8. Method in accordance with claim 6 or 7 wherein the X2 AP set up request also comprises an additional field corresponding to the X2 connection type preference of the requesting base station (BS3).

9. Method in accordance with one of the claims from 6 to 8 in combination with claim 3 wherein, in the case of a registration of the targeted base station (BS2) comprising a direct connection preference, upon reception of the X2 AP set up request from the requesting base station (BS3), the X2 gateway (X2 GW) sends back the at least one IP address of the targeted base station (BS2) to the requesting base station (BS3).

10. Method in accordance with claim 9 wherein the at least one IP address of the targeted base station (BS2) is retrieved by the X2 gateway (X2 GW) from the registration information and is transmitted to the requesting base station (BS3) within an X2 AP set up failure message.

11. Method in accordance with one of the claims from 6 to 8 wherein it also comprises a step of forwarding the X2 AP set up request by the X2 gateway (X2 GW) to the targeted base station (BS2) based on the registration information of the targeted base station (BS2) and a step of reception, by the targeted base station (BS3), of the X2 AP set up request.

12. Method in accordance with claim 11 in combination with claim 8 wherein it also comprises a step of selection, by the targeted base station (BS2), of an X2 connection type based on its X2 connection preference and the X2 connection type preference of the requesting base station (BS3) transmitted within an X2 AP set up request message.

13. Method in accordance with claim 12 in combination with claim 7 wherein if direct X2 connection is selected and an IP address is included in the X2 AP set up request, the method also comprises the following steps :
- the sending, by the targeted base station (BS2) in response to the X2 AP set up request, of an X2 AP set up failure toward the local X2 gateway (X2 GW), the said X2 AP set up failure indicating the selection of a direct X2 connection,
- the sending, by the targeted base station (BS2) directly to the requesting base station (BS3), of a direct X2 AP set up request based on an IP address of the requesting base station (BS3) received within the X2 AP set up request sent by the said requesting base station (BS3),
- the establishment of a direct X2 connection by the requesting base station (BS3) based on the received direct X2 AP set up request, the said establishment being achieved by replying a direct X2 AP set up response to the targeted base station (BS2).

14. Method in accordance with claim 11 wherein if direct X2 connection is selected, the method also comprises the following steps :
- the sending, by the targeted base station (BS2), of an X2 AP set up failure toward the local X2 gateway (X2 GW), the said X2 AP set up failure comprising the targeted base station (BS2) IP address and the agreement of a direct X2 connection,
- the forwarding by the local X2 gateway (X2 GW) of the X2 AP set up failure to the requesting base station (BS3),
- the reception by the requesting base station (BS3) of the X2 AP set up failure,
- the sending, by the requesting base station (BS3) directly to the targeted base station, of a direct X2 AP set up request based on the targeted base station (BS2) IP address received within the X2 AP set up failure,
- the establishment of a direct X2 connection by the targeted base station (BS2) based on the received direct X2 AP set up request, the said establishment being achieved by replying a direct X2 AP set up response to the requesting base station (BS3).

15. Method in accordance with claim 11 wherein if X2 connection through the X2 gateway (X2 GW) is selected, the method also comprises the following steps :
- the sending, by the targeted base station (BS2), of an X2 set up response toward the local X2 gateway (X2 GW), the said X2 set up response comprising the selection of a X2 connection through the X2 gateway,
- the forwarding by the local X2 gateway (X2 GW) of the X2 AP set up response to the requesting base station (BS3),
- the reception by the requesting base station (BS3) of the X2 AP set up response,
- the establishment of an X2 connection through the X2 gateway (X2 GW) by the requesting base station (BS3) based on the received X2 AP set up response.

16. Method in accordance with claim 11 wherein, the method also comprises the following steps :
- the sending, by the targeted base station (BS2), of an X2 AP set up response toward the local X2 gateway (X2 GW), the said X2 AP set up response comprising the preference of a direct X2 connection, the targeted base station ID and an IP address of the targeted base station (BS2),
- the forwarding by the local X2 gateway (X2 GW) of the X2 AP set up response to the requesting base station (BS3),
- the reception by the requesting base station (BS3) of the X2 AP set up response,
- the establishment of an X2 connection through the X2 gateway (X2 GW) by the requesting base station (BS3) based on the received X2 AP set up response.
- the tearing down, by the requesting base station (BS3), of the X2 connection established through the X2 gateway (X2 GW),
- the sending, to the targeted base station (BS2), of a direct X2AP set up request based on the targeted base station IP address received within the X2AP set up response message,
- the establishment of a direct X2 connection by the targeted base station (BS2) based on the received direct X2 AP set up request, the said establishment being achieved by replying a direct X2 AP set up response to the requesting base station (BS3).

17. Method in accordance with one of the previous claims wherein the two base stations (BS2, BS3)are femto base stations or macro base stations or one macro base station and one femto base station.

18. Base station (BS2, BS3) comprising means for establishing an X2 connection with another base (BS3, BS2) station using an X2 gateway (X2 GW) by sending X2 AP set up message to the other base station (BS2, BS3) via the X2 gateway (X2GW) wherein the base station comprises further means for registering toward a local X2 gateway (X2 GW) and for adding at least one additional field within the X2 AP set up message, the said at least one additional field comprising its IP address which is transmitted to the other base station (BS2, BS3) via the X2 gateway (X2 GW) in order to establish a direct X2 connection between both base stations (BS2, BS3).

19. X2 gateway (X2 GW) comprising means for:
- receiving registration messages comprising an ID, at least one IP address and an X2 connection type preference from the local base stations (BS2, BS3),
- establishing a mapping table based on the received registration messages,
- emitting an X2 AP set up message comprising an IP address stored in the mapping table upon request from a base station (BS3) to establish an X2 connection with another base station (BS2) having an X2 connection type preference corresponding to a direct X2 connection.

## Patentansprüche

1. Verfahren für das Herstellen einer X2-Verbindung zwischen zwei Basisstationen (BS2, BS3) in einem Netzwerk, X2-Gateways (X2 GW) umfassend, wobei besagtes Verfahren einen Schritt des Registrierens der beiden Basisstationen (BS2, BS3) in Richtung auf ein lokales X2-Gateway (X2 GW) und einen Schritt des durch eine Basisstation (BS3) erfolgenden Sendens einer X2-AP-Aufbauanfrage an das lokale X2-Gateway (X2 GW) umfasst, eine ID der Basisstation (BS3) und eine ID der anderen Basisstation (BS2) umfassend, zu der die X2-Verbindung herzustellen ist, und wobei mindestens eine IP-Adresse einer der beiden Basisstationen (BS2, BS3) von dem lokalen X2-Gateway (X2 GW) in einer X2-AP-Aufbau-Nachricht an die andere Basisstation (BS2) übermittelt und unter Verwendung der übermittelten IP-Adresse eine X2-Verbindung zwischen den beiden Basisstationen (BS2, BS3) hergestellt wird.

2. Verfahren nach Anspruch 1, wobei die hergestellte X2-Verbindung eine direkte X2-Verbindung ist.

3. Verfahren nach Anspruch 1 oder 2, wobei die Basisstationen (BS2, BS3) in Richtung auf ein lokales X2-Gateway (X2 GW) registriert werden, wenn dieses angeschaltet wird, und wobei die Registrierung einer Basisstation (BS2, BS3) das Senden von deren ID und ihrer IP-Adresse an das lokale X2-Gateway (X2 GW) umfasst.

4. Verfahren nach Anspruch 3, wobei das Registrieren einer Basisstation (BS2, BS3) weiterhin das Senden einer X2-Verbindungstyp-Präferenz umfasst, die entweder einer direkten X2-Verbindung oder einer X2-Verbindung über das X2-Gateway (X2 GW) entspricht.

5. Verfahren nach einem der vorgenannten Ansprüche, wobei besagtes Verfahren nach dem Registrierungsschritt einen Schritt des Feststellens einer Basisstation (BS2) durch die andere Basisstation (BS3) und das Abrufen der ID der festgestellten Basisstation (BS2) durch die feststellende Basisstation (BS3) umfasst.

6. Verfahren nach einem der vorgenannten Ansprüche, wobei besagtes Verfahren das Senden einer X2-AP-Aufbauanfrage von einer anfragenden Basisstation (BS3) an das X2-Gateway (X2 GW) zum Herstellen einer X2-Verbindung mit einer angesteuerten Basisstation (BS2) umfasst, wobei die X2-AP-Aufbauanfrage Folgendes umfasst:
- eine ID der anfragenden Basisstation (BS3), und
- eine ID der angesteuerten Basisstation (BS2).

7. Verfahren nach Anspruch 6, wobei die X2-AP-Aufbauanfrage weiterhin ein zusätzliches, die IP-Adresse derjenigen anfragenden Basisstation (BS3) enthaltendes Feld umfasst, welche die X2-AP-Aufbauanfrage sendet.

8. Verfahren nach Anspruch 6 oder 7, wobei die X2-AP-Aufbauanfrage weiterhin ein zusätzliches, die Präferenz der anfragenden Basisstation hinsichtlich der X2-Verbindung (BS3) enthaltendes Feld umfasst.

9. Verfahren nach einem der Ansprüche 6 bis 8 in Kombination mit Anspruch 3, wobei im Fall einer Registrierung einer angesteuerten, eine Direktverbindungspräferenz umfassenden Basisstation (BS2) auf den Empfang der X2-AP-Aufbauanfrage von der anfragenden Basisstation (BS3) hin das X2-Gateway (X2 GW) mindestens eine IP-Adresse der angesteuerten Basisstation (BS2) an die anfragende Basisstation (BS3) zurücksendet.

10. Verfahren nach Anspruch 9, wobei die mindestens eine IP-Adresse der angesteuerten Basisstation (BS2) durch das X2-Gateway (X2 GW) von den Registrierungsinformationen abgerufen und in einer X2-AP-Aufbaufehlermeldung an die anfragende Basisstation (BS3) übermittelt wird.

11. Verfahren nach einem der Ansprüche 6 bis 8, wobei das Verfahren weiterhin einen Schritt des Weiterleitens der X2-AP-Aufbauanfrage durch das X2-Gateway (X2 GW) an die angesteuerte Basisstation (BS2) umfasst, was auf der Grundlage der Registrierungsinformationen der angesteuerten Basisstation (BS2) und eines Schritts des durch die angesteuerte Basisstation (BS3) erfolgenden Empfangs der X2-AP-Aufbauanfrage erfolgt.

12. Verfahren nach Anspruch 11 in Kombination mit Anspruch 8, wobei das Verfahren weiterhin einen Schritt der durch die angesteuerte Basisstation (BS2) erfolgenden Auswahl eines X2-Verbindungstyps auf der Grundlage ihrer X2-Verbindungspräferenz und der X2-Verbindungstyppräferenz der anfragenden Basisstation (BS3) umfasst, welche in der X2-AP-Aufbauanfragenachricht übermittelt werden

13. Verfahren nach Anspruch 12 in Kombination mit Anspruch 7, wobei dann, wenn eine direkte X2-Verbindung ausgewählt und eine IP-Adresse in die X2-AP-Aufbauanfrage aufgenommen wird, das Verfahren weiterhin die folgenden Schritte umfasst:
- das durch die angesteuerte Basisstation (BS2) in Reaktion auf die X2-AP-Aufbauanfrage erfolgende Senden einer X2-AP-Aufbaufehlermeldung an das lokale X2-Gateway (X2 GW), wobei besagte X2-AP-Aufbaufehlermeldung die Auswahl einer direkten X2-Verbindung umfasst,
- das durch die angesteuerte Basisstation (BS2) direkt an die anfragende Basisstation (BS3) erfolgende Senden einer direkten X2-AP-Aufbauanfrage auf der Grundlage der IP-Adresse der anfragenden Basisstation (BS3), welche in der X2-AP-Aufbauanfrage empfangen wurde, die von besagter anfragender Basisstation (BS3) gesendet wurde.
- das Herstellen einer direkten X2-Verbindung durch die anfragende Basisstation (BS3) auf der Grundlage der empfangenen, direkten X2-AP-Aufbauanfrage, wobei besagtes Herstellen durch das Antworten anhand einer direkten X2-AP-Aufbauantwort an die angesteuerte Basisstation (BS2) erfolgt.

14. Verfahren nach Anspruch 11, wobei das Verfahren dann, wenn eine direkte X2-Verbindung ausgewählt wird, weiterhin die folgenden Schritte umfasst:
- das durch die angesteuerte Basisstation (BS2) erfolgende Senden einer X2-AP-Aufbaufehlermeldung an das lokale X2-Gateway (X2 GW), wobei die X2-AP-Aufbaufehlermeldung die IP-Adresse der angesteuerten Basisstation (BS2) und eine Zustimmung zu einer direkten X2-Verbindung umfasst,
- das durch das lokale X2-Gateway (X2 GW) erfolgende Weiterleiten der X2-AP-Aufbaufehlermeldung an die anfragende Basisstation (BS3),
- den Empfang der X2-AP-Aufbaufehlermeldung durch die anfragende Basisstation (BS3),
- das durch die anfragende Basisstation (BS3) direkt an die angesteuerte Basisstation erfolgende Senden einer direkten X2-AP-Aufbauanfrage auf der Grundlage der IP-Adresse der angesteuerten Basisstation (BS2), die in der X2-AP-Aufbaufehlermeldung empfangen wurde,
- das Herstellen einer direkten X2-Verbindung durch die angesteuerte Basisstation (BS2) auf der Grundlage der empfangenen, direkten X2-AP-Aufbauanfrage, wobei besagtes Herstellen durch das Antworten anhand einer direkten X2-AP-Aufbauantwort an die anfragende Basisstation (BS3) erfolgt.

15. Verfahren nach Anspruch 11, wobei das Verfahren dann, wenn eine X2-Verbindung über das X2-Gateway (X2 GW) ausgewählt wird, weiterhin die folgenden Schritte umfasst:
- das durch die angesteuerte Basisstation (BS2) erfolgende Senden einer X2-Aufbauantwort an das lokale X2-Gateway (X2 GW), wobei besagte X2-Aufbauantwort die Auswahl einer X2-Verbindung über das X2-Gateway umfasst,
- das durch das lokale X2-Gateway (X2 GW) erfolgende Weiterleiten der X2-AP-Aufbauantwort an die anfragende Basisstation (BS3),
- den Empfang der X2-AP-Aufbauantwort durch die anfragende Basisstation (BS3),
- das durch die anfragende Basisstation (BS3) erfolgende Herstellen einer X2-Verbindung über das X2-Gateway (X2 GW) auf der Grundlage der X2-AP-Aufbauantwort.

16. Verfahren nach Anspruch 11, wobei das Verfahren weiterhin die folgenden Schritte umfasst.
- das durch die angesteuerte Basisstation (BS2) erfolgende Senden einer X2-AP-Aufbauantwort an das lokale X2-Gateway (X2 GW), wobei besagte X2-AP-Aufbauantwort die Präferenz einer direkten X2-Verbindung, die ID der angesteuerten Basisstation und die IP-Adresse der angesteuerten Basisstation (BS2) umfasst,
- das durch das lokale X2-Gateway (X2 GW) erfolgende Weiterleiten der X2-AP-Aufbauantwort an die anfragende Basisstation (BS3),
- den Empfang der X2-AP-Aufbauantwort durch die anfragende Basisstation (BS3),
- das durch die anfragende Basisstation (BS3) erfolgende Herstellen einer X2-Verbindung über das X2-Gateway (X2 GW) auf der Grundlage der X2-AP-Aufbauantwort.
- das durch die anfragende Basisstation (BS3) erfolgende Abbrechen der über das X2-Gateway (X2 GW) hergestellten X2-Verbindung,
- das an die angesteuerte Basisstation (BS2) erfolgende Senden einer direkten X2-AP-Aufbauanfrage auf der Grundlage der IP-Adresse der angesteuerten Basisstation, die in der X2-AP-Aufbauantwort empfangen wurde,
- das Herstellen einer direkten X2-Verbindung durch die angesteuerte Basisstation (BS2) auf der Grundlage der empfangenen, direkten X2-AP-Aufbauanfrage, wobei besagtes Herstellen durch das Antworten anhand einer direkten X2-AP-Aufbauantwort an die anfragende Basisstation (BS3) erfolgt.

17. Verfahren nach einem der vorgenannten Ansprüche, wobei die beiden Basisstationen (BS2, BS3) Femtobasisstationen oder Makrobasisstationen bzw. eine Makrobasisstation und eine Femtobasisstation sind.

18. Basisstation (BS2, BS3), Mittel für das Herstellen einer X2-Verbindung mit einer anderen Basisstation (BS2, BS3) unter Verwendung eines X2-Gateways (X2 GW) umfassend, was durch das Senden einer X2-AP-Aufbaufehlermeldung über das X2-Gateway (X2 GW) an die andere Basisstation (BS2, BS3) erfolgt, wobei die Basisstation weiterhin Mittel für das Registrieren in Richtung auf ein lokales X2-Gateway (X2 GW) und für das Hinzufügen mindestens eines zusätzlichen Feldes in die X2-AP-Aufbaunachricht umfasst, wobei das besagte, mindestens eine zusätzliche Feld seine IP-Adresse umfasst, welche über das X2-Gateway (X2 GW) an die andere Basisstation (BS2, BS3) übermittelt wird, um eine direkte X2-Verbindung zwischen beiden Basisstationen (BS2, BS3) herzustellen.

19. X2-Gateway (X2 GW), Mittel für Folgendes umfassend:
- den Empfang von Registrierungsnachrichten, welche eine ID, mindesten eine IP-Adresse und eine X2-Verbindungstyppräferenz der lokalen Basisstationen (BS2, BS3) umfassen,
- das Herstellen einer Zuordnungstabelle auf der Grundlage der empfangenen Registrierungsnachrichten,
- das Senden einer X2-AP-Aufbaunachricht, welche eine IP-Adresse umfasst, die in einer Zuordnungstabelle gespeichert ist, wobei das Senden auf Anfrage einer Basisstation (BS3) zur Herstellung einer X2-Verbindung mit einer anderen Basisstation (BS2) erfolgt, deren Verbindungstyppräferenz einer direkten X2-Verbindung entspricht.

## Revendications

1. Procédé d'établissement d'une connexion X2 entre deux stations de base (BS2, BS3) dans un réseau comprenant des passerelles X2 (X2 GW), ledit procédé comprenant une étape d'enregistrement des deux stations de base (BS2, BS3) dans une passerelle X2 locale (X2 GW), une étape d'envoi par une station de base (BS3) d'un message de demande d'établissement d'un X2 AP à la passerelle X2 locale (X2 GW) comprenant un identifiant de la station de base (BS3) et un identifiant de l'autre station de base (BS2) avec laquelle la connexion X2 doit être établie et dans lequel au moins une adresse IP d'une des deux stations de base (BS2, BS3) est transmise par la passerelle X2 locale (X2 GW) à l'autre station de base (BS2) dans un message d'établissement d'un X2 AP et une connexion X2 est établie entre les deux stations de base (BS2, BS3) en utilisant l'adresse IP transmise.

2. Procédé selon la revendication 1 dans lequel la connexion X2 établie est une connexion X2 directe.

3. Procédé selon la revendication 1 ou 2 dans lequel les stations de base (BS2, BS3) s'enregistrent dans une passerelle locale (X2 GW) lorsqu'elles sont activées et dans lequel l'enregistrement d'une station de base (BS2, BS3) comprend l'envoi de son identifiant et de son adresse IP à la passerelle X2 locale (X2 GW).

4. Procédé selon la revendication 3 dans lequel l'enregistrement d'une station de base (BS2, BS3) comprend également l'envoi d'une préférence de type de connexion X2, correspondant à une connexion X2 directe ou à une connexion X2 par l'intermédiaire de la passerelle X2 (X2 GW).

5. Procédé selon l'une des revendications précédentes comprenant, après l'étape d'enregistrement, une étape de détection d'une station de base (BS2) par l'autre station de base (BS3) et la récupération de l'identifiant de la station de base (BS2) détectée par la station de base (BS3) de détection.

6. Procédé selon l'une des revendications précédentes comprenant l'envoi d'une demande d'établissement d'un X2 AP à partir d'une station de base demandeuse (BS3), à la passerelle X2 (X2 GW) pour établir une connexion X2 avec une station de base ciblée (BS2), ladite demande d'établissement d'un X2 AP comprenant :
- un identifiant de station de base demandeuse (BS3) et,
- un identifiant de station de base ciblée (BS2).

7. Procédé selon la revendication 6 dans lequel la demande d'établissement d'un X2 AP comprend également un champ supplémentaire correspondant à l'adresse IP de la station de base demandeuse (BS3) envoyant ladite demande d'établissement d'un X2 AP.

8. Procédé selon la revendication 6 ou 7 dans lequel la demande d'établissement d'un X2 AP comprend également un champ supplémentaire correspondant à la préférence de type de connexion X2 de la station de base demandeuse (BS3).

9. Procédé selon l'une des revendications 6 à 8 en association avec la revendication 3 dans lequel, en cas d'enregistrement de la station de base ciblée (BS2) comprenant une préférence de connexion directe, dès réception de la demande d'établissement d'un X2 AP à partir de la station de base demandeuse (BS3), la passerelle X2 (X2 GW) renvoie l'au moins une adresse IP de la station de base ciblée (BS2) à la station de base demandeuse (BS3).

10. Procédé selon la revendication 9 dans lequel l'au moins une adresse IP de la station de base ciblée (BS2) est récupérée par la passerelle X2 (X2 GW) à partir des informations d'enregistrement et est transmise à la station de base demandeuse (BS3) dans un message d'échec d'établissement d'un X2 AP.

11. Procédé selon l'une des revendications 6 à 8 comprenant également une étape de transfert de la demande d'établissement d'un X2 AP par la passerelle X2 (X2 GW) vers la station de base ciblée (BS2) sur la base des informations d'enregistrement de la station de base ciblée (BS2) et une étape de réception, par la station de base (BS3) ciblée, de la demande d'établissement d'un X2 AP.

12. Procédé selon la revendication 11 en association avec la revendication 8 comprenant en outre une étape de sélection, par la station de base ciblée (BS2), d'un type de connexion X2 sur la base de sa préférence de connexion X2 et de la préférence de type de connexion X2 de la station de base demandeuse (BS3) transmise dans un message de demande d'établissement d'un X2 AP.

13. Procédé selon la revendication 12 en association avec la revendication 7 dans lequel si la connexion X2 directe et sélectionnée et qu'une adresse IP est incluse dans la demande d'établissement d'un X2 AP, le procédé comprend également les étapes suivantes :
- l'envoi, par la station de base ciblée (BS2) en réponse à la demande d'établissement d'un X2 AP, d'un échec d'établissement d'un X2 AP dans la passerelle X2 locale (X2 GW), ledit échec d'établissement d'un X2 AP indiquant la sélection d'une connexion X2 directe,
- l'envoi, par la station de base ciblée (BS2) directement vers la station de base demandeuse (BS3), d'une demande d'établissement d'un X2 AP directe sur la base d'une adresse IP de la station de base demandeuse (BS3) reçue dans la demande d'établissement d'un X2 AP envoyée par ladite station de base demandeuse (BS3),
- l'établissement d'une connexion X2 directe par la station de base demandeuse (BS3) sur la base de la demande d'établissement d'un X2 AP directe reçue, ledit établissement étant réalisé en envoyant une réponse d'établissement d'un X2 AP directe à la station de base ciblée (BS2).

14. Procédé selon la revendication 11 dans lequel si la connexion X2 directe est sélectionnée, le procédé comprend également les étapes suivantes :
- l'envoi, par la station de base ciblée (BS2), d'un échec d'établissement d'un X2 AP dans la passerelle X2 locale (X2 GW), ledit échec d'établissement d'un X2 AP comprenant l'adresse IP de la station de base ciblée (BS2) et l'accord d'une connexion X2 directe,
- le transfert par la passerelle X2 locale (X2 GW) de l'échec d'établissement d'un X2 AP vers la station de base demandeuse (BS3),
- la réception par la station de base demandeuse (BS3) de l'échec d'établissement d'un X2 AP,
- l'envoi, par la station de base demandeuse (BS3) directement à la station de base ciblée, d'une demande d'établissement d'un X2 AP directe sur la base de l'adresse IP de la station de base ciblée (BS2) reçue dans l'échec d'établissement d'un X2 AP,
- l'établissement d'une connexion X2 directe par la station de base ciblée (BS2) sur la base de la demande d'établissement d'un X2 AP directe reçue, ledit établissement étant réalisé en envoyant une réponse d'établissement d'un X2 AP directe à la station de base demandeuse (BS3).

15. Procédé selon la revendication 11 comprenant également, si la connexion X2 par l'intermédiaire de la passerelle X2 (X2 GW) est sélectionnée, les étapes suivantes :
- l'envoi, par la station de base ciblée (BS2), d'une réponse d'établissement d'une connexion X2 dans la passerelle X2 locale (X2 GW), ladite réponse d'établissement d'une connexion X2 comprenant la sélection d'une connexion X2 par l'intermédiaire de la passerelle X2,
- le transfert par la passerelle X2 locale (X2 GW) de la réponse d'établissement d'un X2 AP vers la station de base demandeuse (BS3),
- la réception par la station de base demandeuse (BS3) de la réponse d'établissement d'un X2 AP,
- l'établissement d'une connexion X2 par l'intermédiaire de la passerelle X2 (X2 GW) par la station de base demandeuse (BS3) sur la base de la réponse d'établissement d'un X2 AP reçue.

16. Procédé selon la revendication 11, le procédé comprenant également les étapes suivantes :
- l'envoi, par la station de base ciblée (BS2), d'une réponse d'établissement d'un X2 AP dans la passerelle X2 locale (X2 GW), ladite réponse d'établissement d'un X2 AP comprenant la préférence d'une connexion X2 directe, l'identifiant de la station de base ciblée et une adresse IP de la station de base ciblée (BS2),
- le transfert par la passerelle X2 locale (X2 GW) de la réponse d'établissement d'un X2 AP vers la station de base demandeuse (BS3),
- la réception par la station de base demandeuse (BS3) de la réponse d'établissement d'un X2 AP,
- l'établissement d'une connexion X2 par l'intermédiaire de la passerelle X2 (X2 GW) par la station de base demandeuse (BS3) sur la base de la réponse d'établissement d'un X2 AP reçue.
- la coupure, par la station de base demandeuse (BS3), de la connexion X2 établie par l'intermédiaire de la passerelle X2 (X2 GW),
- l'envoi, à la station de base ciblée (BS2), d'une demande d'établissement d'un X2AP directe sur la base de l'adresse IP de la station de base ciblée reçue dans le message de réponse d'établissement d'un X2AP,
- l'établissement d'une connexion X2 directe par la station de base ciblée (BS2) sur la base de la demande d'établissement d'un X2 AP directe reçue, ledit établissement étant réalisé en envoyant une réponse d'établissement d'un X2 AP directe à la station de base demandeuse (BS3).

17. Procédé selon l'une des revendications précédentes dans lequel les deux stations de base (BS2, BS3) sont des stations de base femto ou des stations de base macro ou une station de base macro et une station de base femto.

18. Station de base (BS2, BS3) comprenant des moyens
pour établir une connexion X2 avec une autre station de base (BS3, BS2) en utilisant une passerelle X2 (X2 GW) en envoyant un message d'établissement d'un X2 AP à l'autre station de base (BS2, BS3) par l'intermédiaire de la passerelle X2 (X2 GW), la station de base comprenant d'autres moyens pour s'enregistrer dans une passerelle X2 locale (X2 GW) et pour ajouter au moins un champ supplémentaire dans le message d'établissement d'un X2 AP, ledit au moins un champ supplémentaire comprenant son adresse IP qui est transmise à l'autre station de base (BS2, BS3) par l'intermédiaire de la passerelle X2 (X2 GW) afin d'établir une connexion X2 directe entre les deux stations de base (BS2, BS3).

19. Passerelle X2 (X2 GW) comprenant des moyens pour :
- recevoir des messages d'enregistrement comprenant un identifiant, au moins une adresse IP et une préférence de type de connexion X2 à partir des stations de base locales (BS2, BS3),
- établir une table de correspondance sur la base des messages d'enregistrement reçus,
- émettre un message d'établissement d'un X2 AP comprenant une adresse IP stockée dans la table de correspondance lors d'une demande d'une station de base (BS3) pour établir une connexion X2 avec une autre station de base (BS2) ayant une préférence de type de connexion X2 correspondant à une connexion X2 directe.
